# DEMANDE DE BREVET EUROPEEN

(11) **EP 3 696 463 A1**
(43) Date de publication de la demande: **19.08.2020**
(21) Numéro de dépôt: 20156064.6
(22) Date de dépôt: 07.02.2020
(51) Int. Cl.: F23N 1/00, F16K 31/60

(54) **VALVE DE CONTRÔLE DE DÉBIT GAZ ET ROBINET COMPRENANT UNE TELLE VALVE**

(30) Priorité: 13.02.2019 FR 1901434
(71) Demandeur: Société Nouvelle Sourdillon, 37250 Veigne (FR)
(72) Inventeur: TROCHOU, Christophe, 37250 ATHEE SUR CHER (FR)
(74) Mandataire: Plasseraud IP

(57) **Abrégé**

L'invention se rapporte à une valve de contrôle de débit de gaz (1) à crantage comprise dans un robinet de gaz et comprenant un boîtier (10) ayant une paroi latérale et un fond, la paroi latérale étant cylindrique et s'étendant le long d'un axe longitudinal (Z) jusqu'au fond, le fond étant pourvu d'une ouverture débouchante qui est coaxiale au premier axe longitudinal (Z), une tige (5) s'étendant selon le premier axe longitudinal (Z) en étant disposée dans l'ouverture débouchante et étant pourvue d'un pion (6) s'étendant radialement en direction de la paroi latérale selon un axe transversal au premier axe longitudinal (Z). Le fond est spécialement pourvu d'une alternance de saillies (S1, S2,...Sn) et de creux (C1, C2,...Cn), les saillies et les creux s'étendant chacun radialement le long d'un axe (X) transversal au premier axe longitudinal (Z), chacun desdits creux définissant les crans d'une plage de sélection du débit sortant de la valve de contrôle de débit de gaz (1).

## Description

### Domaine technique

La présente description concerne une valve de contrôle de débit de gaz à crantage comprise dans un robinet de gaz.

Plus précisément, la présente description concerne une valve de contrôle de débit de gaz comprenant :
- un boîtier ayant une paroi latérale et un fond, la paroi latérale étant cylindrique et s'étendant le long d'un premier axe longitudinal jusqu'au fond, le fond étant pourvu d'une ouverture débouchante et qui est coaxiale au premier axe longitudinal,
- une tige s'étendant selon le premier axe longitudinal en étant disposée dans l'ouverture et étant pourvue d'un pion s'étendant radialement en direction de la paroi latérale selon un axe transversal au premier axe longitudinal,
- une alternance de saillies et de creux pourvue sur le fond, les saillies et les creux s'étendant radialement le long d'un axe transversal au premier axe longitudinal, chacun desdits creux définissant les crans d'une plage de sélection du débit sortant de la valve de contrôle de débit de gaz.

### Etat De La Technique

Il est connu de l'état de la technique une valve de contrôle de débit de gaz fournissant une sensation de léger cliquetis lors de la rotation du bouton de réglage. Le document US 7174913 décrit un exemple de système de ce type, avec une valve de gaz dont la tige comprend un pion latéral à son extrémité qui lors de la rotation de la tige vient en contact avec une pièce comprenant de nombreuses très petites indentations. Néanmoins, ces indentations sont comprises sur une surface dénommée "surface glissante" dans le brevet, le but étant d'obtenir une sensation continue auditive et tactile de léger cliquetis lors de la rotation de la tige.

Un tel système d'indentation est inadapté pour obtenir une fixité ou une précision dans le maintien en position de la tige, notamment parce que les cliquetis sont glissants et indénombrables à l'usage par l'utilisateur. Ce dispositif ne permet donc pas d'obtenir un débit de gaz toujours identique pour une position de la tige donnée.

D'autres systèmes décrits par exemples dans les documents EP2889539, US3751003 ou US6726175 décrivent des solutions pour donner un effet de crantage grâce à des pièces bosselées, percées ou crantées dissociées du boîtier de la valve de débit de gaz, telles que des éléments suiveurs à bille et ressort, des plaques bosselées ou des plaques percées. Ces solutions nécessitant des pièces supplémentaires de crantage distinctes du boîtier pour parvenir à un effet de crantage, elles posent des difficultés de réalisation à l'homme du métier au niveau de la fabrication, de l'assemblage et de la maintenance des multiples pièces de la valve de débit de gaz.

### Objets

La présente description a notamment pour but de pallier aux inconvénients précédemment mentionnés.

A cet effet, la présente valve de contrôle de débit de gaz à crantage est une solution intégrée et adaptée pour permettre le positionnement précis, stable et répété de la manette de sélection de débit de gaz grâce à des crans intégrés au boîtier de ladite valve.

Grâce à ces dispositions, chaque position correspond à un débit de gaz associé à une puissance de chauffe du brûleur, garantissant une puissance stable définie pour chaque position de la manette, tel que le font les appareils de chauffe à énergie électrique ou à induction. Ainsi, quel que soit le gaz utilisé, le débit de gaz est directement lié à la position de la manette.

Dans des modes de réalisation, on peut éventuellement avoir recours en outre à l'une et/ou à l'autre des dispositions suivantes :
- une paroi transversale s'étend à l'intérieur du boîtier selon un axe transversal au premier axe longitudinal depuis la paroi latérale et jusqu'au fond,
- une oreille prolonge le boîtier vers l'extérieur, ladite oreille étant apte à accueillir un moyen de fixation,
- un méplat est présent sur un des creux ou sur une des saillies,
- les creux sont semi-cylindriques,
- les saillies sont semi-cylindriques,
- les saillies sont pyramidales,
- les creux s'étendent radialement le long d'un axe transversal depuis l'intersection de l'ouverture débouchante avec le fond et jusqu'à la paroi latérale,
- les saillies s'étendent radialement le long d'un axe transversal depuis l'intersection de l'ouverture débouchante avec le fond et jusqu'à la paroi latérale,
- deux des creux sont sensiblement d'une même forme et d'une même dimension et deux des saillies sont sensiblement d'une même forme et d'une même dimension,
- le matériau formant le boîtier est choisi parmi de l'aluminium, du laiton, de l'acier ou du cuivre,
- la tige est métallique,
- la tige comprend un méplat qui accueille une manette de sélection rotative.

### Brève description des dessins

D'autres caractéristiques et avantages apparaîtront au cours de la description suivante d'une forme de réalisation, donnée à titre d'exemple non limitatif, en regard des dessins joints. Sur les dessins :
**Fig. 1a**

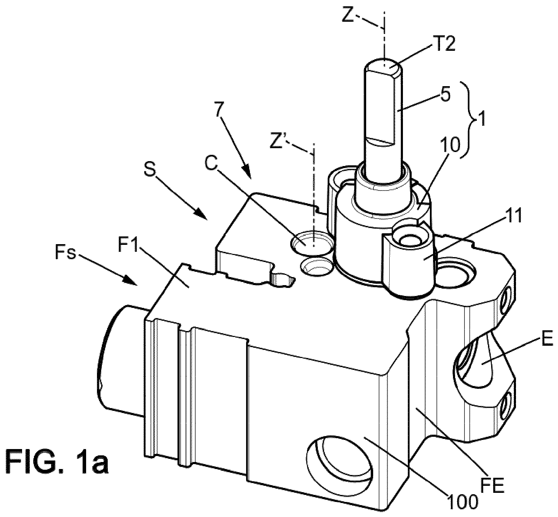

   [Fig. 1a] est une vue en perspective d'un robinet de gaz sur lequel est pourvue une valve de contrôle de débit de gaz à crantage ;
**Fig. 1b**

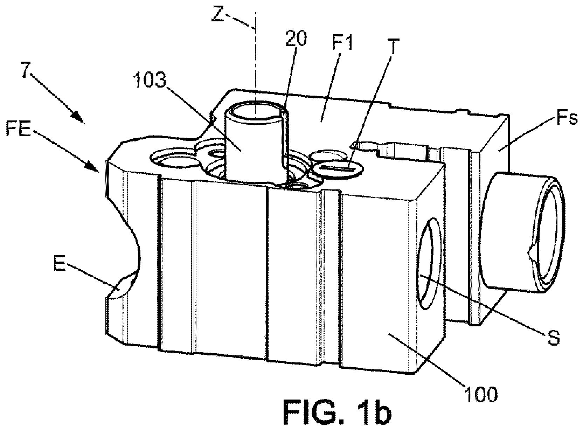

   [Fig. 1b] est une vue en perspective d'un robinet de gaz dans lequel est pourvu un cône de régulation de débit et un volet rotatif ;
**Fig. 1c**

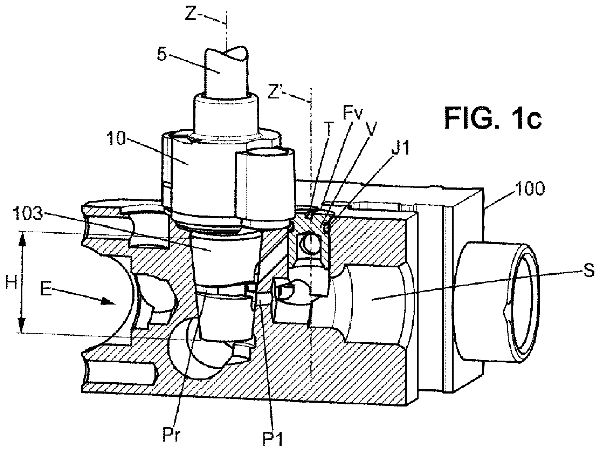

   [Fig. 1c] est une vue en coupe sélective du robinet comprenant une valve selon le mode de réalisation de la figure 1b, comprenant un volet rotatif fermé et la valve étant exclue de la coupe sélective ;
**Fig. 1d**

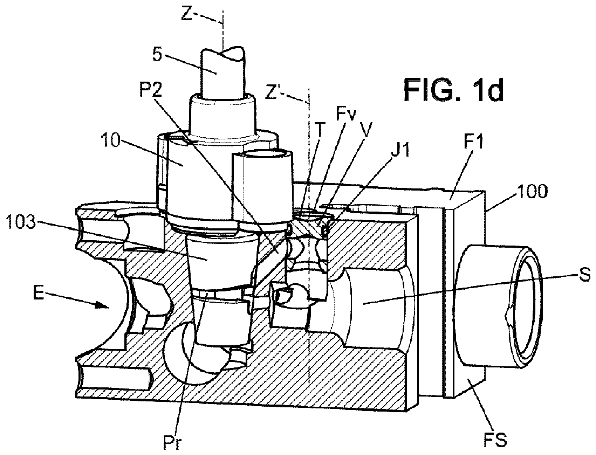

   [Fig. 1d] est la même vue en perspective qu'à la figure 1a avec le volet rotatif en position ouverte ;
**Fig. 1e**

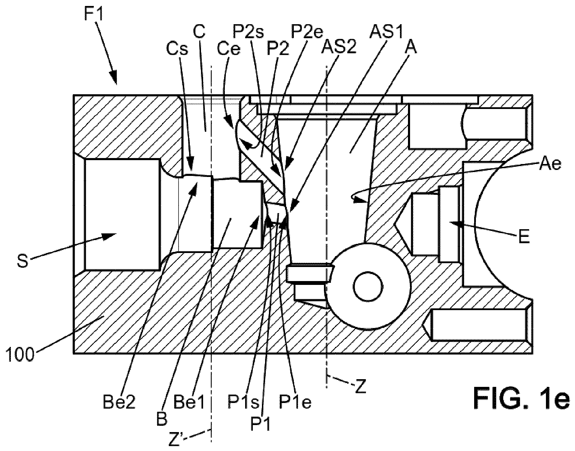

   [Fig. 1e] est une vue en coupe du corps de robinet de la figure 1b pris seul ;
**Fig. 2a**

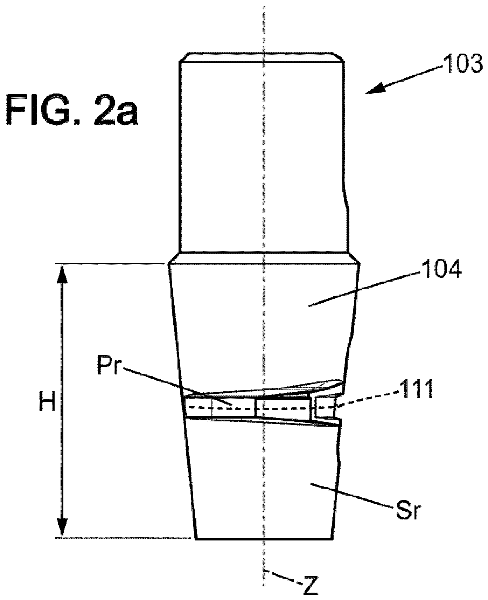

   [Fig. 2a] est une vue de face du cône de régulation ;
**Fig. 2b**

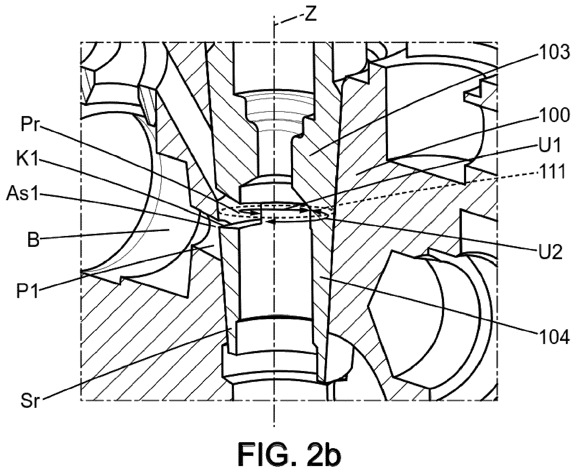

   [Fig. 2b] est une vue en coupe du robinet de gaz avec le cône de régulation de la figure 2a en première position angulaire montrant une section de passage étroite du passage Pr ;
**Fig. 2c**

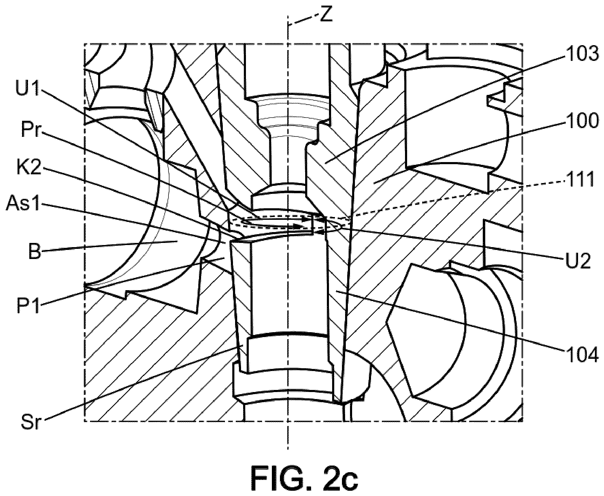

   [Fig. 2c] est une vue en coupe du robinet de gaz avec le cône de régulation de la figure 2a en deuxième position angulaire, montrant une section de passage large du passage Pr ;
**Fig. 3a**

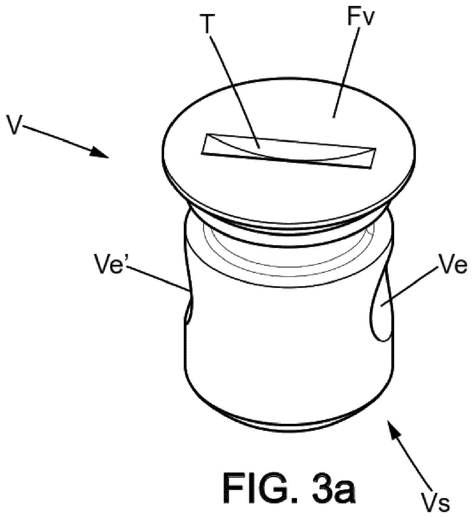

   [Fig. 3a] est une vue en perspective du volet rotatif pris seul ;
**Fig. 3b**

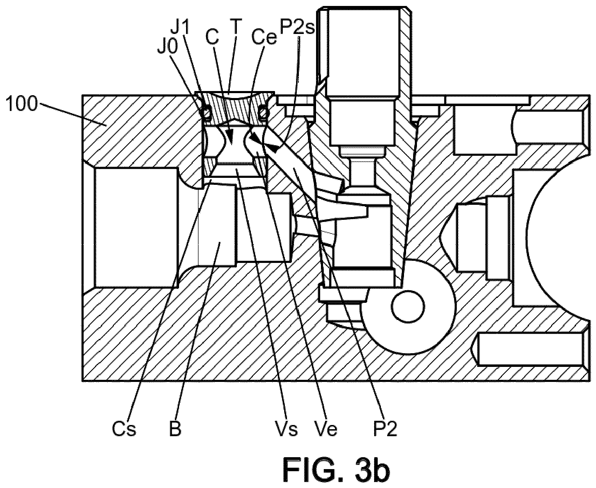

   [Fig. 3b] est une vue en coupe du robinet de gaz avec le volet rotatif ;
**Fig. 3c**

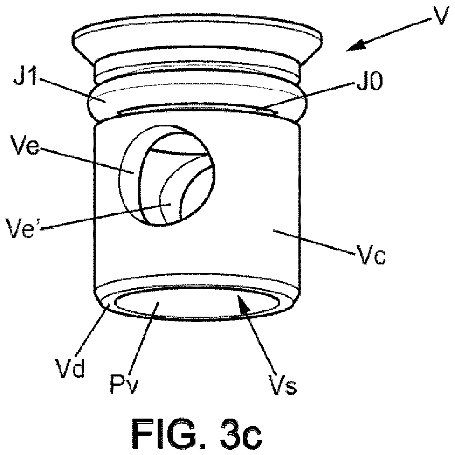

   [Fig. 3c] est une vue en perspective du volet rotatif de la figure 3a, sur lequel est placé un joint d'étanchéité ;
**Fig. 3d**

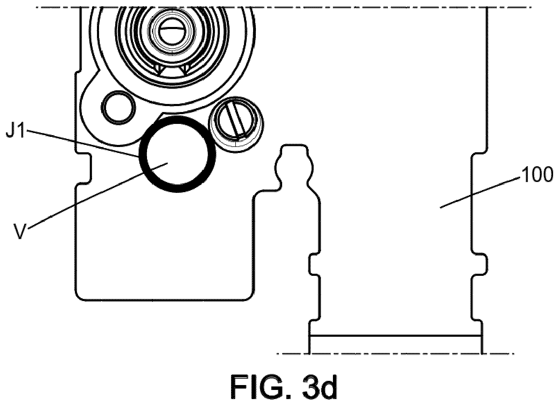

   [Fig. 3d] est une vue en coupe du robinet de gaz avec le volet rotatif ;
**Fig. 4a**

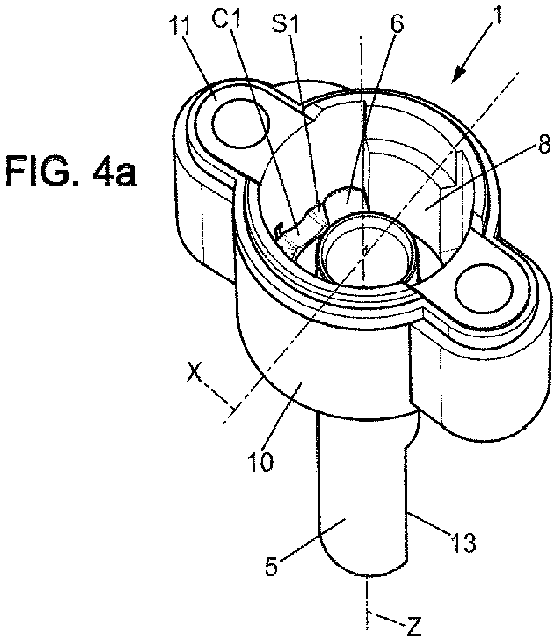

   [Fig. 4a] est une vue en perspective d'une valve de contrôle de débit de gaz à crantage selon l'invention ;
**Fig. 4b**

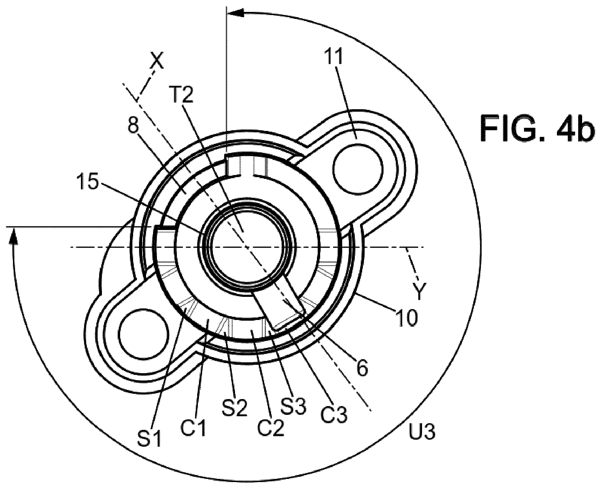

   [Fig. 4b] est une vue du dessus de la valve de contrôle de débit de gaz à crantage selon le mode de réalisation de la figure 4a ;
**Fig. 5a**

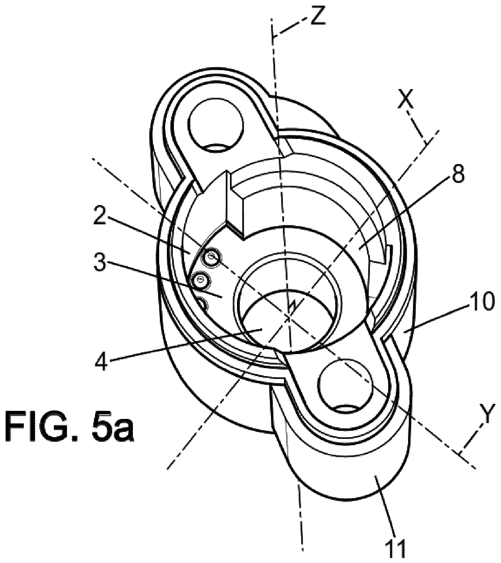

   [Fig. 5a] est une vue en perspective d'une valve de contrôle de débit de gaz à crantage selon un autre mode de réalisation de l'invention ;
**Fig. 5b**

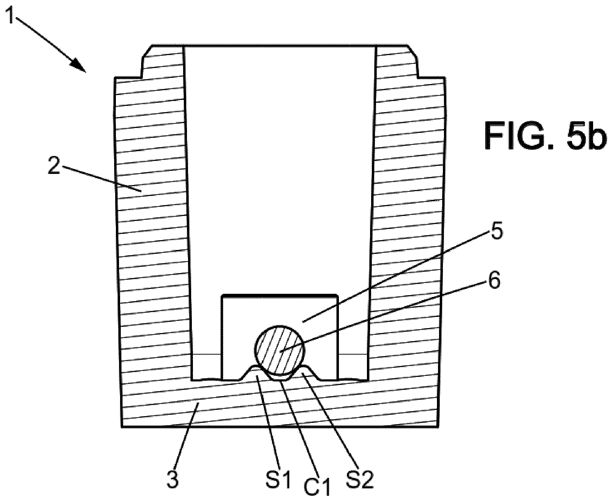

   [Fig. 5b] est une vue en coupe du profil d'un cran de la valve de contrôle de débit de gaz à crantage de la figure 5a, dans lequel est logé un pion ;
**Fig. 6a**

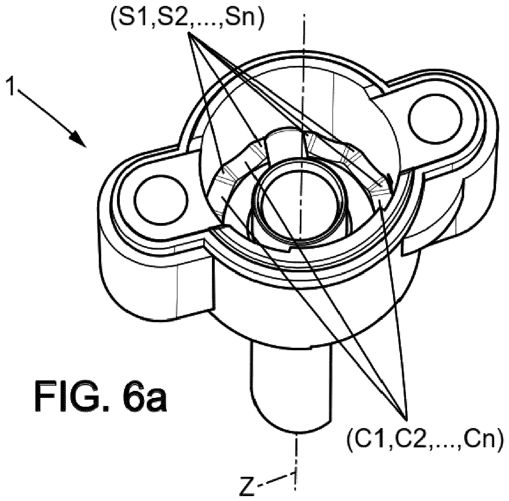

   [Fig. 6a] est une autre vue en perspective de la valve de contrôle de débit de gaz à crantage de la figure 5a ;
**Fig. 6b**

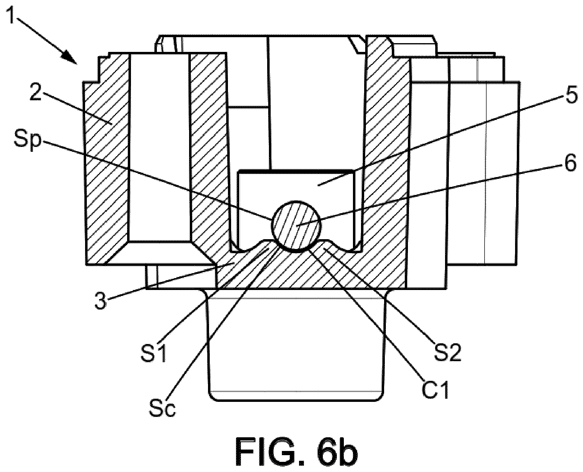

   [Fig. 6b] est une vue en coupe du profil d'un cran de la valve de contrôle de débit de gaz à crantage de la figure 6a, dans lequel est logé un pion ;
**Fig. 7a**

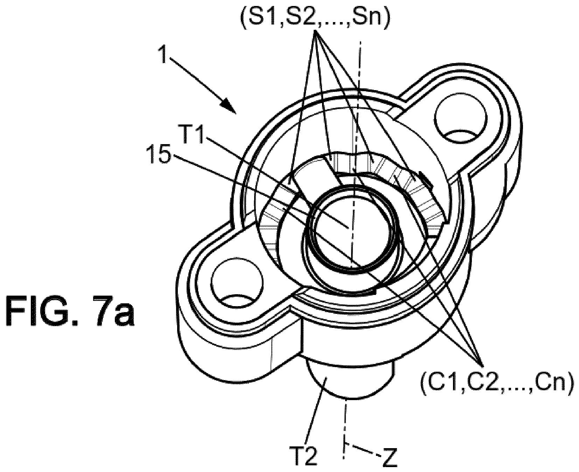

   [Fig. 7a] est une vue en perspective d'une valve de contrôle de débit de gaz à crantage selon un autre mode de réalisation ;
**Fig. 7b**

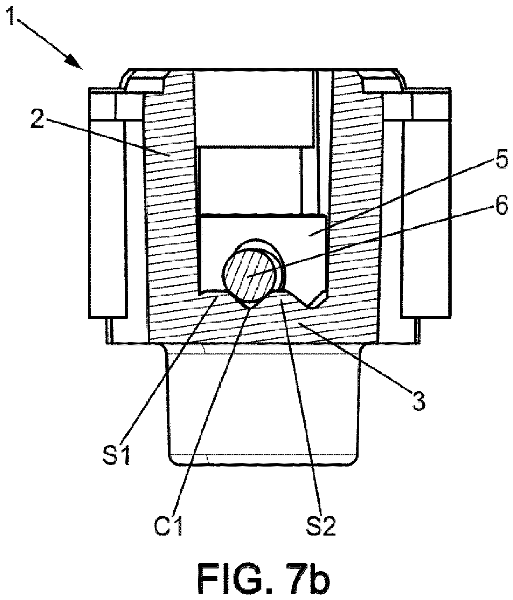

   [Fig. 7b] est une vue en coupe du profil d'un cran de la valve de contrôle de débit de gaz à crantage de la figure 7a, dans lequel est logé un pion ;
**Fig. 7c**

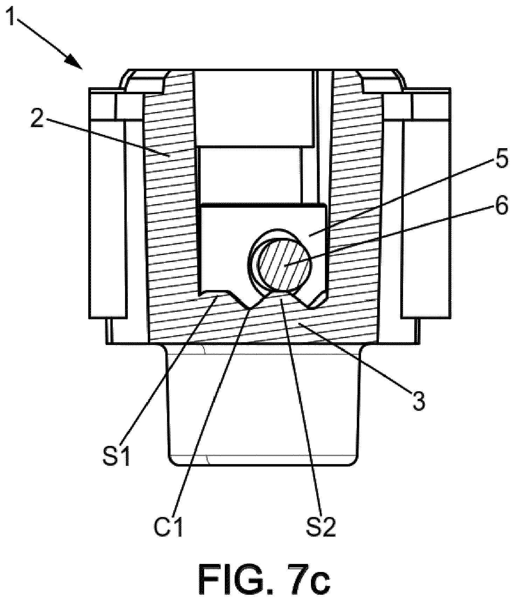

   [Fig. 7c] est la vue en coupe de la figure 7b, dans laquelle le pion est délogé du cran.

### Description Détaillée

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Sauf précision contraire, les expressions "approximativement", "sensiblement", "environ", "de l'ordre de", etc. signifient qu'une légère variation par rapport à la valeur nominale considérée est possible, notamment d'un pourcentage faible, en particulier à 10% près.

Dans la description qui suit, les termes « intérieur » et « extérieur » et leurs synonymes sont entendus comme se rapportant à l'intérieur et l'extérieur du boîtier 10 (ou palier en jargon indus), d'une cavité, d'un couloir, d'un passage ou d'une chambre de la valve 1 de contrôle de débit de gaz ou du robinet 7 de gaz lorsque ledit robinet 7 est dans son état d'assemblage final avec la valve 1 (visible en figure 1a). Sauf mention contraire explicite, les volumes intérieurs du robinet 7 sont communicants avec les volumes extérieurs du robinet 7 uniquement via une entrée E et une sortie S du robinet 7 illustrées sur la figure 1b.

Par souci de clarté, seuls les éléments et étapes utiles à la compréhension des modes de réalisation décrits ont été détaillés. En particulier, les mécanismes d'assemblage de la valve 1 de la présente invention sur le robinet 7 n'ont pas été détaillés, les modes de réalisation décrits étant compatibles pour un assemblage avec les robinets de gaz usuels. Comme présenté en figure 1a, une valve 1 telle que décrite dans la présente invention est utilisée pour réguler le débit de gaz sortant d'un robinet 7 en direction de brûleurs, par exemple pour une cuisinière à gaz ou un barbecue à gaz. L'exemple illustré à la figure 1a est relatif à une table de cuisson, pour laquelle la tige 5 (détaillée plus loin) du robinet 7 s'étend perpendiculairement à la table de cuisson et donc au plan de cuisson. Toutefois, le robinet 7 peut être utilisé avec d'autres supports, tel que par exemple une gazinière. Dans ce cas, la tige 5 s'étend parallèlement au plan de cuisson. Un tel robinet 7 peut utiliser du gaz naturel autrement appelé gaz de ville ou gaz GN et/ou du gaz enrichi, tel que le butane ou le propane autrement appelé gaz LP. La plupart des robinets de gaz sont conçus pour un seul type de gaz (GN ou LP), du fait du débit différent à fournir aux brûleurs en sortie du robinet pour un usage approprié, notamment par rapport au pouvoir calorifique du gaz préalable à son usage, et la température de flamme du gaz enflammé en utilisation. Le robinet 7 de la présente invention présente un système de détournement, autrement appelé système de bypass. Le système de détournement permet l'utilisation du robinet pour un couple de gaz (GN ou LP). En d'autres termes, le système de détournement permet d'utiliser le robinet 7 quelque soit le type de gaz utilisé. Ce système consiste à apporter un débit additionnel de sortie à un gaz de pouvoir calorifique insuffisante. Un tel débit additionnel est obtenu par l'utilisation d'un couloir auxiliaire P2 additionnel à un premier couloir P1, visibles en figures 1c et 1d. Le couloir auxiliaire P2 mène à une cavité supplémentaire B qui rejoint la cavité suivante C vers la sortie S du robinet 7, additionnant ainsi le débit du couloir auxiliaire P2 au débit de sortie S du robinet 7 via la cavité B. Par ailleurs, le robinet 7 est destiné à recevoir une valve 1 à crantage qui permet à l'utilisateur une sélection précise et répétable du débit de gaz sortant.

La figure 1c illustre une vue en coupe sélective du robinet 7 comprenant la valve 1 et le volet rotatif V. La valve 1 est hors de la coupe sélective et donc montrée pleinement. Le volet V est ici en position fermée et le robinet 7 ne délivre pas de débit additionnel en débit sortant par la sortie S. Ce robinet 7 est dans la configuration pour utiliser favorablement un gaz dense ou de pouvoir calorifique élevé, tel qu'un gaz LP, ne nécessitant pas de débit sortant additionnel pour un usage adéquat pour un appareil à gaz particulier. Le robinet 7 comprend un corps 100. Le corps 100 qui est en matière contenant par exemple de l'aluminium ou du laiton. Le corps 100 et réalisé généralement en fonderie noyautée, matriçage ou filage. Ce corps 100 est pourvu de l'entrée de gaz E et de la sortie de gaz S. Lors de l'assemblage final du robinet 7, par exemple sur une cuisinière à gaz, l'entrée E est destinée à recevoir le gaz sortant de la distribution fournie, par exemple via un tuyau reliant la sortie d'une bouteille de gaz LP à ladite entrée E. Lors de l'assemblage final de l'appareil à gaz, la sortie S du robinet de gaz est destinée à être reliée aux brûleurs de la cuisinière à gaz desquels sort le gaz destiné à être enflammé pour réaliser un chauffage.

Comme visible en figure 1e, le corps 100 est creux et comprend une pluralité de cavités, de couloirs et de passages destinés à relier l'entrée de gaz E à la sortie de gaz S. Chacune des dénommées cavités, chacun des couloirs et chacun des passages pourraient tous indistinctement être entre autres dénommés sans perte de sens "cavité", "couloir", "passage", ou encore "chambre", "ouverture", "trou", "vide", "dégagement", "canal", "galerie", "conduit" ou "boyaux", pour désigner un volume intérieur creux du corps du robinet de gaz.

Une première cavité A de la pluralité de cavités, de couloirs et de passages s'étend selon un premier axe longitudinal Z et a une entrée Ae et une première sortie As1. Cette première cavité A est reliée par son entrée Ae à l'entrée de gaz E du corps 100. L'entrée Ae peut être pourvue selon l'axe longitudinal Z. Alternativement, l'entrée Ae peut être pourvue transversalement à l'axe longitudinal Z. Un cône de régulation 103, visible en figures 1c et 1d, s'étend selon le premier axe longitudinal Z et a une surface extérieure Sr. Ce cône 103 est logé dans l'entrée Ae et dans la première sortie As1 de la première cavité A, de sorte que la surface extérieure Sr dudit cône 103 bouche la première sortie As1 de la première cavité A. Le cône de régulation 103 est apte à tourner sur lui-même selon le premier axe longitudinal Z dans la cavité A. A cette fin, la première cavité A présente une taille et une forme adaptées à la surface extérieure Sr du cône 103, par exemple une forme conique complémentaire de ladite surface extérieure Sr. Des moyens connus permettent d'obtenir une rotation adéquate du cône 103 dans la première cavité A, c'est-à-dire suffisamment régulière, constante et précise pour la régulation du débit de gaz, tout en souhaitant maintenir durablement cette fonctionnalité. Ainsi, un roulement à bille ou un palier lisse par exemple peut être prévu entre le cône 103 et la première cavité A. Un lubrifiant peut être disposé au contact de la surface extérieure Sr du cône 103 pour favoriser son glissement contre la première cavité A. Le cône 103 est destiné à être mis en rotation par l'utilisateur via une manette de sélection rotative (non illustrée) montée sur le robinet 7.

Sur la figure 1c, le robinet 7 comprend le premier couloir P1 après la première cavité A. Comme visible sur la figure 1^{e}, le premier couloir P1 a une entrée P1e et une sortie P1s. L'entrée P1e est directement reliée à la première sortie As1 de la première cavité A. Le robinet 7 comprend en outre une deuxième cavité B qui a une première entrée Be1 et une sortie Bs, la première entrée Be1 de ladite deuxième cavité B étant directement reliée à la sortie P1s du premier couloir P1.

Nous allons décrire à présent comment le cône de régulation 103 permet de réguler le débit de gaz dans le robinet. Le cône de régulation 103 peut tourner selon le premier axe Z dans la première cavité A. Il existe deux plages distinctes de positions angulaires du cône de régulation 103. La première plage de positions angulaires du cône de régulation 103 permet d'ouvrir le robinet 7, c'est-à-dire de permettre un débit non nul de gaz en sortie S du robinet 7. A l'inverse, la deuxième plage de positions angulaires du cône de régulation 103 permet de fermer le robinet 7, c'est-à-dire d'empêcher tout débit de gaz en sortie S du robinet 7. On définit ainsi que le cône de régulation 103 a une première position angulaire O1 comprise dans la plage principale U1 d'angle d'ouverture du robinet de gaz. La plage principale U1 est comprise entre 0 degré et approximativement 210 ou approximativement de 270 à 300 degrés. Le robinet 7 comprend un passage Pr pourvu dans le cône de régulation 103 permettant de relier l'entrée Ae de la première cavité A à sa première sortie As1, seulement lorsque ledit cône de régulation 103 est dans la première position angulaire O1. A l'inverse, lorsque le cône de régulation 103 a une position angulaire non comprise dans la plage principale U1 d'angle, le passage Pr ne permet pas de relier l'entrée Ae de la première cavité A à la première sortie As1 de la première cavité A, car la surface extérieure Sr du cône de régulation 103 obstrue la première sortie As1 de la première cavité A. On définit que le cône de régulation 103 a une deuxième position angulaire O2 comprise dans la plage secondaire U2 d'angle, dans laquelle position angulaire O2 le passage Pr pourvu dans le cône de régulation 103 diverge de la première sortie As1 de la première cavité A.

Dans le mode de réalisation de l'invention illustré en figure 1c, le passage Pr pourvu dans le cône de régulation 103 est tel que la plage principale U1 d'angle d'ouverture du robinet 7 représente environ trois quarts de tour et la plage secondaire U2 d'angle de fermeture du robinet 7 représente environ un quart de tour autour d'une circonférence donnée 111 (visible en figure 2a) du cône de régulation 103. La plage principale U1 d'angle du cône de régulation 103 permet ainsi d'ouvrir le robinet 7 sur environ trois quarts de la plage de rotation de la manette de sélection. La plage secondaire U2 d'angle du cône de régulation 103 permet de fermer le robinet de gaz sur environ un quart de la plage de rotation de la manette de sélection rotative. En outre, le passage Pr pourvu dans le cône de régulation 103 présente une forme spécifique pour obtenir une régulation variable selon la deuxième position angulaire O2 du cône de régulation 103. En l'espèce, le passage Pr s'étend autour de ladite circonférence 111 du cône de régulation 103, et, par définition sur toute la plage principale U1 d'angle qui correspond à l'ouverture du débit de gaz. Une portion 104 du cône 103 est logée dans la première cavité A. Ladite portion 104 est conique et a une hauteur H selon le premier axe longitudinal Z. La plage principale U1 d'angle d'ouverture du robinet 7 représente environ trois quarts de tour du cône de régulation 103 et la plage secondaire U2 d'angle de fermeture du robinet 7 représente environ un quart de tour autour de la circonférence 111. La plage principale U1 d'angle du cône de régulation 103 permet ainsi d'ouvrir le robinet 7 sur environ trois quarts de la plage de rotation de la manette de sélection. La plage secondaire U2 d'angle du cône de régulation 103 permet de fermer le robinet de gaz sur environ un quart de la plage de rotation de la manette de sélection rotative. En outre, le passage Pr pourvu dans le cône de régulation 103 présente une forme spécifique pour obtenir une régulation variable selon la deuxième position angulaire O2 du cône de régulation 103. Comme illustré sur la figure 2a, la circonférence 111 est choisie selon le premier axe longitudinal Z à environ la moitié de la hauteur H de la portion 104 du cône 103. Ainsi, lorsque le cône 103 est inséré dans la première cavité A, le passage Pr se trouve sensiblement centré en hauteur dans la première cavité A. Le passage Pr se trouve ainsi en regard à la fois de l'entrée Ae et des sorties As1 et As2, lorsque le cône 3 est dans la première position d'angle O1. Ledit passage Pr a une section s'élargissant continuellement dans un sens selon ladite circonférence 111. Ainsi, quand le cône de régulation 103 est orienté dans la deuxième position angulaire O2 (robinet ouvert), le passage Pr présente une certaine section K1 en regard de la première sortie As1. Comme illustré sur les figures 2b et 2c, la section K1 d'ouverture augmente lors d'une rotation selon le premier axe longitudinal Z du cône 103 dans un premier sens. Le passage Pr présente alors une section K2 plus grande en regard de la première sortie As1 (voir figure 2c). Le débit sortant du robinet 7 est ainsi augmenté. A l'inverse, la section d'ouverture K2 diminue lors d'une rotation du cône 103 dans le second sens opposé au premier sens (voir figure 2b). Le passage Pr présente alors une section K1 plus petite en regard de la première sortie As1. Le débit du robinet 7 est ainsi diminué. Les sections K1 et K2 dépendent de la puissance recherchée. Par exemple, les sections K1 et K2 s'étendent au minimum sur 1.5 mm ; et par exemple les sections K1 et K2 s'étendent au maximum sur 3 mm. La section K2 peut être le double de la section K1. Le passage Pr est réalisé dans le cône 103 de sorte à ce que le débit de gaz sortant du robinet 7 s'ajuste environ selon une rampe progressive pendant une rotation continue du cône 3. L'ajout du crantage sur le fond de la valve 1 crée des positions définies, stables et répétables de cette régulation.

Comme illustré sur la figure 1e, le passage Pr pourvu dans le cône 103 débouche sur la première sortie As1 qui est directement liée à l'entrée P1e du premier couloir P1. Le premier couloir P1 débouche par sa sortie P1s dans la deuxième cavité B par son entrée Be1. Comme illustré en figure 1e, la cavité B débouche directement sur la sortie S du corps 100. La deuxième cavité B débouche donc sur l'extérieur du corps 100. En outre, le couloir auxiliaire P2 relie une deuxième sortie As2 de la première cavité A à l'entrée Ce d'une troisième cavité C. Selon un mode de réalisation particulier, les couloirs P1 et P2 sont cylindriques. Aussi la deuxième cavité B débouche ici sur une face F1 dite face supérieure du corps 100. Ladite face supérieure F1 est une face extérieure du corps 100. Comme dans les modes de réalisation décrits, la face supérieure F1 est préférentiellement choisie sur une face extérieure du corps 100 différente de la face FE d'entrée E du corps 100 et différente de la face FS de sortie S du corps 100. Le volet V est logé dans la cavité B et présente une face Fv qui débouche sur l'extérieur du corps 100 par la face extérieure F1.

La figure 3a est une vue en perspective du volet V. Le volet V peut avoir une empreinte T pourvue sur ladite face Fv permettant de tourner le volet V. L'empreinte T fait donc face à l'extérieur du corps 100. Elle peut être par exemple une rainure pour tournevis plat comme illustré. Par exemple, l'empreinte T peut aussi être réalisée en forme de croix pour tournevis cruciforme, être un trou borgne de forme carré. Le volet V peut contenir du laiton.

Le corps 100 peut être dans un matériau contenant de l'aluminium. Comme illustré sur la figure 3b, un interstice J0 peut exister dans la troisième cavité C entre ledit corps 100 et le volet V.

Afin d'assurer l'étanchéité du robinet 7, un joint J1 peut être prévu sur le volet V comme illustré sur la figure 3c. Le joint J1 est ainsi prévu pour boucher l'interstice J0 pouvant exister entre le volet V et la troisième cavité C.

Comme illustré sur la figure 3d que le joint J1 peut être circulaire et entoure le volet V. Moyennant ce joint d'étanchéité J1, le robinet 7 conserve son étanchéité malgré que la troisième cavité C débouche sur l'extérieur du corps 100 et même en cas de rotation du volet V.

Comme illustré sur la figure 1b, le premier axe longitudinal Z traverse en son centre la première cavité A et représente l'axe longitudinal du boîtier 100 cylindrique et de la portion 104 conique du cône de régulation 103.

Sur la figure 1c est illustré que le volet V peut tourner selon un second axe longitudinal Z'. Le second axe longitudinal Z' est parallèle au premier axe longitudinal Z et traverse la seconde cavité B en son centre. Le second axe longitudinal Z' est coaxial avec le volet V. Sur la figure 1c, le volet V ferme le débit additionnel car sa surface extérieure bouche l'entrée Ce de la troisième cavité C.

Sur la figure 3b est illustré un passage Pv pourvu dans le volet V, définissant son entrée Ve et sa sortie Vs. Le volet V est ici dans une position ouverte, comme sur la figure 3c, pour une utilisation du robinet 7 avec un gaz nécessitant un débit additionnel en sortie S, comme le gaz GN par exemple. La figure 3c montre une coupe transversale de la troisième cavité C comprenant le volet rotatif V et le joint J1 dans l'interstice J0. L'entrée Ve est directement en regard de la sortie P2s du couloir auxiliaire P2.

Le volet V peut avantageusement comprendre une partie creuse en forme de cylindre de révolution, comme illustré sur la figure 3c. Le passage Pv comprend alors un premier trou correspondant à l'entrée Ve, situé sur la surface courbe latérale Vc de la partie en forme cylindrique du volet V, et un deuxième trou correspondant à la sortie Vs, situé sur le disque Vd correspondant à la base qui est intérieure au robinet 7 de la forme cylindrique. Moyennant une telle forme de cylindre de révolution, l'entrée Ve et la sortie Vs sont sensiblement à angle droit. Le volet rotatif V peut ainsi être tourné de la position passante, dans laquelle Ve est en regard de l'entrée Ce, à la position de fermeture, en environ un quart de tour du volet V. Avantageusement, l'homme du métier peut prévoir un troisième trou débouchant Ve' comme illustré sur les figure 3a et 3c, moyennant quoi Ve ou Ve' peuvent être tous les deux mis en regard de l'entrée Ce pour ouvrir le robinet. Ainsi, il suffit d'environ un quart de tour du volet rotatif dans n'importe quel sens de rotation pour rendre le passage Pv passant et ajouter un débit additionnel de sortie au robinet 7.

Les figures 4a et 4b sont des vues en perspective et de dessus d'une valve de contrôle de débit de gaz 1, en particulier une telle valve 1 comprenant un crantage. La valve 1 comporte un boîtier 10 et une tige 5.

La figure 5a représente un boîtier 10 de la valve 1 ayant une paroi latérale 2 et un fond 3. Ce boîtier 10 peut avantageusement être métallique (par exemple en acier). Il peut contenir de la fonte ou de l'aluminium. Il est préférentiellement réalisé en fonderie, avec ou sans noyau. La paroi latérale 2 est cylindrique et s'étend le long du premier axe longitudinal Z jusqu'au fond 3. Le fond 3 et la paroi latérale 2 définissent que le boîtier 10 est cylindrique et délimitent son intérieur et son extérieur. Dans la représentation de la figure 5a, le fond 3 est circulaire donc le boîtier 10 est un cylindre à base circulaire et l'intérieur du boîtier 10 est l'ensemble des points compris sur les normales à la surface concave de la paroi latérale 2, l'extérieur du boîtier 10 étant l'ensemble des points non compris à l'intérieur du boîtier 10. Dans d'autres modes de réalisation, le fond 3 peut être d'une forme non circulaire, notamment d'une forme elliptique ou polygonale. Le fond 3 est pourvu en outre d'une ouverture débouchante 4 qui est coaxiale au premier axe longitudinal Z selon lequel s'étend le boîtier 10 cylindrique. Ainsi, l'ouverture 4 est centrée par rapport au fond 3 du boîtier 10. Une tige 5 s'étend selon le premier axe longitudinal Z. Elle est insérée ou emmanchée dans l'ouverture débouchante 4. Elle peut coulisser selon le premier axe longitudinal Z dans l'ouverture débouchante 4. Elle peut tourner sur elle-même à 360° dans l'ouverture débouchante 4 selon le premier axe longitudinal Z. Selon un exemple, la tige 5 est métallique. Selon un autre exemple, la tige 5 est en aluminium, ou en acier. La tige 5 est un organe actionneur destiné à être mis en rotation selon le premier axe Z par l'utilisateur via une manette de sélection rotative (non illustrée ici). Il peut être prévu du lubrifiant dans l'ouverture débouchante 4 afin de faciliter les mouvements de la tige 5 dans l'ouverture débouchante 4. Lorsque la tige 5 est disposée dans l'ouverture débouchante 4, une première extrémité T1 de la tige 5 est comprise dans l'intérieur du boîtier 10, la seconde extrémité T2 de la tige 5 étant comprise à l'opposé et à l'extérieur du boîtier 10. La seconde extrémité T2 est destinée à accueillir la manette de sélection rotative (non illustrée ici). La seconde extrémité T2 peut à cet égard comprendre au moins une asymétrie, notamment un méplat 13 comme représenté sur la figure 4a. Cette asymétrie peut aussi par exemple comprendre une aspérité, une bosse, une saillie, un perçage, une empreinte, une rainure ou un chanfrein, à savoir toute forme complémentaire d'une manette de sélection rotative qui accueillerait ladite asymétrie. Un pion 6 est pourvu sur la tige 5. Lorsque la tige 5 est disposée dans l'ouverture débouchante, le pion 6 s'étend radialement en direction de la paroi latérale 2 selon un axe transversal à l'axe longitudinal Z. Le pion 6 peut être monobloc avec la tige 5 ou être une pièce rapportée fixée à la tige 5. Le pion 6 est positionné à proximité de la première extrémité T1. Le pion est situé à une distance de la première extrémité T1 inférieure à un quart de la longueur de la tige 5. Le pion peut être de forme cylindrique. Selon d'autres modes de réalisation non représentés, le pion 6 peut être de forme semi-cylindrique, conique, arrondie, présenter des méplats ou des chanfreins. En tournant sur elle-même dans le trou débouchant, la tige 5 entraîne en rotation le pion 6 autour du premier axe longitudinal Z. Le pion 6 entraîne en rotation le cône 103 par une forme pourvue à cet effet dans ledit cône 103. Par exemple, la figure 1b montre une rainure 20 pourvue dans le cône 103 destinée à loger le pion 6. Le cône 103, le pion 6 et la tige 5 peuvent ainsi être tournés ensemble selon le premier axe longitudinal Z. La rotation solidaire de ces trois éléments se fait sur une plage tertiaire U3 d'angle. La plage tertiaire U3 d'angle comprend une plage principale U1 d'angles correspondant à l'ouverture du robinet et une plage secondaire U2 d'angles correspondant à la fermeture du robinet. Le robinet peut ainsi être ouvert ou fermé sur la plage tertiaire U3 en tournant la tige 5.

Selon les modes de réalisation décrits notamment en figures 4a, 4b et 5a, une paroi transversale 8 est additionnellement pourvue à l'intérieur du boîtier 10. La paroi transversale 8 s'étend à l'intérieur de celui-ci selon un axe transversal X normal au premier axe longitudinal Z. La paroi transversale 8 s'étend depuis la paroi latérale 2 et jusqu'au fond 3. La paroi transversale 8 remplace une des saillies S1, S2,...Sn et un des creux C1, C2,...Cn. Cette paroi transversale 8 empêche la rotation de la tige 5 sur une partie de la plage secondaire U2 de rotation totale. La plage principale U1 et la plage secondaire U2 sont donc réduites par la présence de la paroi transversale 8. L'utilisation de la paroi transversale 8 est un obstacle limitatif de la plage U3 sur laquelle peut tourner la tige 5 est connue de l'homme du métier pour définir notamment la position de fermeture et la position d'ouverture minimale du débit de gaz lorsque le pion 6 est d'un côté ou de l'autre de ladite paroi transversale 8. Comme on le voit sur la figure 4a, le pion 6 bute contre la paroi 8. Un tel dispositif impose alors un premier sens rotatoire pour l'ouverture du débit de gaz et, à l'opposé, un second sens rotatoire pour la fermeture du débit de gaz. En outre, la position de débit de gaz maximal est avantageusement placée à un angle de rotation de la tige 5 qui est directement consécutif à la position de fermeture du débit de gaz lorsque l'utilisateur tourne la manette de sélection rotative du débit de gaz dans le premier sens rotatoire. Ainsi, il est connu d'encourager l'utilisateur du robinet 7 à utiliser le débit maximal pour l'inflammation du gaz sortant du brûleur en plaçant le débit maximal sur un angle proche de et successif à l'angle de fermeture.

Sur la figure 4b est indiquée la plage effective U3 d'angles pour lesquels une sélection du débit de gaz sortant du robinet est possible. En effet, lorsque la tige 5 entraîne selon son axe longitudinal le pion 6 sans que celui-ci ne rencontre d'obstacle tel que la paroi transversale 8, un débit de gaz sortant est directement permis, régulé ou coupé selon l'angle de rotation fourni sur la plage U3.

La tige 5 peut translater selon le premier axe longitudinal Z dans la direction de sa première extrémité T1 vers sa seconde extrémité T2, jusqu'à ce qu'elle soit bloquée lorsque son pion 6 bute contre le fond 3. Dans le sens inverse de translation, à savoir de sa seconde extrémité T2 vers sa première extrémité T1, la tige 5 est bloquée lorsque sa première extrémité T1 bute contre le robinet 7, ce qui stoppe la translation de la tige 5. Pour parfaire l'usage de la manette de sélection rotative, un moyen de maintien de la tige 5 au fond 3 du boîtier 10, c'est-à-dire de maintien en butée du pion 6 contre le fond 3 du boîtier 10 peut être prévu. Ainsi, il peut être prévu un rebord 15 à la première extrémité T1 de la tige 5. Comme illustré sur la figure 4b, ledit rebord 15 peut être notamment prévu dans le prolongement selon l'axe longitudinal Z du bord périphérique de la première extrémité T1. Le rebord 15 peut accueillir un moyen d'appui par exemple un ressort, (non illustré) de la première extrémité T1 contre une partie du robinet 7 sur lequel est fixée la valve 1. Ainsi, le pion 6 est destiné à être plaqué contre le fond 3.

Comme indiqué sur les figures 5a, 6a, 7a, le fond 3 du boîtier 10 comprend une alternance de saillies S1, S2,...Sn et de creux C1, C2,...Cn qui définissent un crantage. Comme indiqué par exemple sur la figure 5a, les saillies S1, S2,...Sn et les creux C1, C2,...Cn s'étendent chacun radialement le long d'un axe Y transversal au premier axe longitudinal Z. L'axe transversal Y est un axe radial du boîtier 10 si celui-ci est cylindrique. L'axe transversal Y est sensiblement proche du fond 3 et transversal au premier axe longitudinal Z. En particulier, il peut être orthogonal au premier axe longitudinal Z. Chacun desdits creux se définit comme un renfoncement relatif à une saillie et est positionné entre deux saillies adjacentes. Chacun des ensembles d'une saillie et d'un creux qui se succèdent définit un cran du crantage. Le crantage est réparti sur l'ensemble de la troisième plage U3 de sélection du débit de gaz sortant de la valve 1. Le pion 6 plaqué sur le fond 3 est donc en interaction directe avec les creux et les saillies lors d'une rotation de la tige 5. En particulier, le pion 6 est destiné à être logé dans et délogé des crans successifs. Pour plaquer le pion dans un cran sans qu'une force excessive ne soit nécessaire à l'utilisateur pour l'en déloger via la tige 5, l'homme du métier choisit un moyen d'appui adapté. En particulier, un ressort peut être choisi avec une constante de raideur suffisamment faible de sorte telle qu'une force minimale soit nécessaire pour déloger le pion 6 d'un cran. Comme on le voit sur les figures 5b, 6b, 7b et 7c, le pion 6 pourvu dans la tige 5 vient donc en appui sur l'alternance de saillies S1, S2,...Sn et de creux C1, C2,...Cn. La forme du pion 6 est complémentaire aux formes des saillies S1, S2,...Sn et des creux C1, C2,...Cn pour obtenir l'effet escompté de maintien du pion 6 dans un cran. En outre, le diamètre du pion 6 est de l'ordre de grandeur de la hauteur des saillies S1, S2,...Sn et de la profondeur des creux C1, C2,...Cn, de sorte que lorsque le pion 6 est logé entre deux des saillies S1, S2,...Sn, celles-ci le maintiennent en position dans un des creux C1, C2,...Cn. Sur la figure 6a, le pion 6 est cylindrique et a un diamètre sensiblement du même ordre de grandeur que le diamètre des creux C1, C2,...Cn. La figure 6b montre un profil de cran selon le mode de réalisation de la figure 6a et comment le pion 6 peut être logé dans un tel cran. Sur la figure 6b le pion 6 voit ainsi sa surface cylindrique externe Sp offrir un maximum de contact avec l'intérieur cylindrique Sc du creux dans lequel il est logé, moyennant quoi le délogement du pion 6 dudit creux est limité par des frottements générés en opposition à ce délogement. Les saillies et les creux peuvent contenir avantageusement des congés, des méplats et des chanfreins de sorte à moduler lors du positionnement du pion 6 dans un cran, les zones de frottement du pion 6 avec les saillies et ainsi de moduler avantageusement l'effort nécessaire à l'utilisateur pour le délogement du pion 6 dudit cran.

La figure 4b est une vue de l'intérieur de la valve 1 comprenant un crantage selon un mode de réalisation dans lequel les creux C1, C2,...Cn sont tous identiques. Selon ce mode de réalisation les creux C1, C2,...Cn sont des semi-cylindres.

Selon un mode de réalisation représenté en figure 5a, les saillies S1, S2,...Sn s'étendent radialement le long de l'axe Y transversal au premier axe longitudinal Z seulement sur une partie de la distance du fond 3 comprise entre l'intersection de l'ouverture débouchante 4 avec le fond 3 et la paroi latérale 2 du boîtier 10. Les saillies S1, S2,... Sn sont ici toutes identiques. Les saillies S1, S2,... Sn sont ici des demi-sphères. Dans une variante de ce mode de réalisation, les saillies peuvent être de forme géométrique différente, par exemple conique, pyramidale ou de forme arrondie. La figure 5b montre un profil de cran selon le mode de réalisation de la figure 5a et comment le pion 6 peut être logé dans un tel cran. Comme illustré sur cette figure 5b, les saillies S1, S2,... Sn sont de forme pyramidale.

Selon le mode de réalisation représenté en figure 6a, les saillies et les creux s'étendent radialement depuis l'intersection de l'ouverture débouchante 4 avec le fond 3 et jusqu'à la paroi latérale 2 du boîtier 10.

Dans le mode de réalisation de la figure 7a, les saillies S1, S2,...Sn sont toutes identiques. Les saillies S1, S2,...Sn comprennent chacune deux chanfreins, un méplat et deux congés qui permettent à l'utilisateur le maintien du pion 6 cylindrique dans un creux entre les deux chanfreins du creux. La figure 6b montre un profil de cran selon le mode de réalisation de la figure 6a et comment le pion 6 peut être logé dans un tel cran. Le délogement du pion 6 du creux se fait par un entraînement en rotation et translation de la tige 5 selon le premier axe longitudinal Z. La figure 7c montre ainsi le pion 6 peut être délogé d'un cran. Les chanfreins participent par leur inclinaison par rapport au fond 3 du boîtier 10 à l'accompagnement du délogement du pion 6.

Selon n'importe lequel des modes de réalisation précédents du boîtier et comme illustré sur les figures 4a, 4b, 5a, 6a et 7a, le boîtier 10 peut disposer d'une oreille 11 en prolongement solidaire dudit boîtier 10 vers l'extérieur. Le boîtier 10 peut disposer avantageusement de deux oreilles. Chaque oreille 11 peut représenter un surplus de matière, une surface, un repli, qui sert à accueillir un moyen de fixation dudit boîtier 10 sur un robinet 7, par exemple une vis pour une fixation par vissage ou un surplus de matière pour un emboutissage, rivetage, pliage ou clippage.

## Revendications

1. Valve de contrôle de débit de gaz (1) comprenant :
- un boîtier (10) ayant une paroi latérale (2) et un fond (3), la paroi latérale (2) étant cylindrique et s'étendant le long d'un premier axe longitudinal (Z) jusqu'au fond (3), le fond (3) étant pourvu d'une ouverture débouchante (4) et qui est coaxiale au premier axe longitudinal (Z),
- une tige (5) s'étendant selon le premier axe longitudinal (Z) en étant disposée dans l'ouverture (4) et étant pourvue d'un pion (6) à proximité d'une extrémité de la tige (5), le pion (6) s'étendant radialement en direction de la paroi latérale (2) selon un axe transversal au premier axe longitudinal (Z),
**caractérisée en ce que** :
le fond (3) est pourvu d'une alternance de saillies (S1, S2,...Sn) et de creux (C1, C2,...Cn), le pion (6) étant en interaction avec les saillies et creux, les saillies et les creux s'étendant radialement le long d'un axe transversal, chacun desdits creux (C1, C2,...Cn) définissant les crans d'une plage (U3) de sélection du débit sortant de la valve de contrôle de débit de gaz (1).

2. Valve de contrôle de débit de gaz (1) selon la revendication 1, dans laquelle une paroi transversale (8) s'étend à l'intérieur du boîtier (10) selon un axe (X) transversal au premier axe longitudinal (Z) depuis la paroi latérale (2) et jusqu'au fond (3).

3. Valve de contrôle de débit de gaz (1) selon l'une quelconque des revendications précédentes, dans laquelle le boîtier (10) dispose d'au moins une oreille (11) qui prolonge ledit boîtier (10) vers l'extérieur, ladite oreille (11) étant apte à accueillir un moyen de fixation.

4. Valve de contrôle de débit de gaz (1) selon l'une quelconque des revendications précédentes, dans laquelle un méplat est présent sur un des creux (C1, C2,...Cn) ou sur une des saillies (S1, S2,...Sn).

5. Valve de contrôle de débit de gaz (1) selon l'une quelconque des revendications précédentes, dans laquelle les creux (C1, C2,...Cn) sont semi-cylindriques.

6. Valve de contrôle de débit de gaz (1) selon l'une quelconque des revendications précédentes, dans laquelle les saillies (S1, S2,...Sn) sont semi-cylindriques.

7. Valve de contrôle de débit de gaz (1) selon l'une quelconque des revendications 1 à 5, dans laquelle les saillies (S1, S2,...Sn) sont pyramidales.

8. Valve de contrôle de débit de gaz (1) selon l'une quelconque des revendications précédentes, dans laquelle les creux (C1, C2,...Cn) s'étendent radialement le long d'un axe transversal depuis l'intersection de l'ouverture débouchante (4) jusqu'à la paroi latérale (2).

9. Valve de contrôle de débit de gaz (1) selon l'une quelconque des revendications précédentes, dans laquelle les saillies (S1, S2,...Sn) s'étendent radialement le long d'un axe transversal depuis l'intersection de l'ouverture débouchante (4) jusqu'à la paroi latérale (2).

10. Valve de contrôle de débit de gaz (1) selon l'une quelconque des revendications précédentes, dans laquelle deux des creux (C1, C2,...Cn) sont sensiblement d'une même forme et d'une même dimension et deux des saillies (S1, S2,...Sn) sont sensiblement d'une même forme et d'une même dimension.

11. Valve de contrôle de débit de gaz (1) selon l'une quelconque des revendications précédentes, dans laquelle le matériau formant le boîtier (10) est choisi parmi de l'aluminium, du laiton, de l'acier ou du cuivre.

12. Valve de contrôle de débit de gaz (1) selon l'une quelconque des revendications précédentes, dans laquelle la tige (5) est métallique.

13. Valve de contrôle de débit de gaz (1) selon l'une quelconque des revendications précédentes, dans laquelle la tige (5) comprend un méplat (13) qui accueille une manette de sélection rotative.

14. Robinet de gaz (7) comportant une valve de contrôle de débit de gaz (1) selon l'une quelconque des revendications précédentes.
